# FASCICULE DE BREVET EUROPEEN

(11) **EP 3 141 427 B1**
(45) Date de publication et mention de la délivrance du brevet: **21.04.2021**
(21) Numéro de dépôt: 16187035.7
(22) Date de dépôt: 02.09.2016
(51) Int. Cl.: B60Q 1/38, F21S 43/145, F21Y 105/00, F21Y 115/15

(54) **DISPOSITIF LUMINEUX À DIODE ÉLECTROLUMINESCENTE ORGANIQUE**
LEUCHTVORRICHTUNG MIT ORGANISCHER ELEKTROLUMINESZENZDIODE
LIGHTING DEVICE WITH ORGANIC LIGHT EMITTING DIODE

(30) Priorité: 08.09.2015 FR 1558337
(43) Date de publication de la demande: 15.03.2017
(73) Titulaire: VALEO VISION, 93012 Bobigny Cedex (FR)
(72) Inventeur: ALBOU, Pierre, 75013 PARIS (FR); RUAT, Olivier, 49800 Trelaze (FR); PATRIZI, Stéphane, 49460 Montreuil Juigné (FR); GODBILLON, Vincent, 75011 PARIS (FR)

(56) Documents cités:
- EP-A1- 2 851 718
- WO-A1-2014/161941
- DE-A1-102012 107 644
- DE-A1-102013 217 848
- DE-A1-102013 223 717
- DE-U1-202014 101 538
- DE-U1-202015 100 207
- GB-A- 2 405 755
- US-A1- 2014 376 252

## Description

L'invention est relative au domaine des dispositifs d'éclairage et de signalisation pour véhicule automobile.

De manière connue, ce type de dispositif tend à se complexifier du fait du nombre croissant de fonctions que ces dispositifs ont vocation à mettre en œuvre. Parmi ces fonctions, on recense notamment la mise en œuvre d'indicateur de directions de type défilant. Par ailleurs, il existe un besoin de donner à ces dispositifs un caractère esthétique qui contribue notamment à définir l'apparence générale, ou la « signature visuelle », du véhicule considéré, et qui le différencie d'autres véhicules. Par exemple, ce caractère esthétique peut prendre la forme d'un dispositif dont la surface d'émission s'étend selon trois dimensions Le document DE 20 2015 100 207 U1 décrit un dispositif lumineux selon le préambule de la revendication 1.

Dans ce contexte, l'invention vise à présenter un dispositif lumineux pour véhicule automobile qui permette la définition d'une signature visuelle particulière pour ce véhicule tout en présentant une conception, une fiabilité et une compacité optimisées.

A cet effet, l'invention propose un dispositif lumineux pour véhicule automobile, le dispositif lumineux comprenant un premier module comprenant une première source de lumière surfacique, notamment une première diode électroluminescente organique, un deuxième module comprenant une deuxième source de lumière surfacique, notamment une deuxième diode électroluminescente organique et un module de contrôle agencé pour contrôler les premier et deuxième modules de sorte à ce que le dispositif lumineux réalise une fonction d'indicateur de direction défilant.

Par « source de lumière surfacique », on entend une source de lumière présentant une surface d'émission de lumière et dont l'épaisseur est négligeable devant les dimensions de cette surface d'émission de lumière.

Si on le souhaite, la première source de lumière surfacique peut être une première diode électroluminescente organique ou OLED et la deuxième source de lumière surfacique peut une deuxième diode électroluminescente organique. Le cas échéant, l'aire de la surface émettrice de lumière de chaque OLED peut être supérieure à 1 cm².

En variante, chaque source de lumière surfacique peut être un panneau lumineux formé par un assemblage de fibres optiques, notamment juxtaposées, tressées ou entremêlées, les fibres optiques étant associées à une ou plusieurs sources lumineuses, notamment comportant une ou plusieurs diodes électroluminescentes LED. Le cas échéant, la ou les sources lumineuses peuvent être agencées pour émettre de la lumière dans les extrémités des fibres optiques, les fibres optiques étant agencées pour diffuser cette lumière via des faces de sorties de ces fibres formées sur leur enveloppe sur toute ou partie de leur longueur, l'ensemble desdites faces de sorties formant ainsi la source de lumière surfacique, également appelée dans ce cas FOLED.

Le cas échéant, chaque diode électroluminescente organique peut être apte à émettre de la lumière de couleur ambre.

Selon l'invention, le module de contrôle est agencé pour contrôler les premier et deuxième modules de sorte à ce que les sources de lumière surfaciques, notamment les diodes électroluminescentes organiques soient séquentiellement dans une configuration active. On entend par configuration active une configuration de la diode électroluminescente organique dans laquelle de la lumière émise par ladite diode sort du dispositif pour participer à ladite fonction d'indicateur de direction défilant.

Selon un mode de réalisation de l'invention, chaque diode électroluminescente organique est montée de façon mobile, par exemple en rotation, dans le dispositif lumineux. Avantageusement, chaque module comporte un actionneur associé à la diode électroluminescente organique dudit module pour amener sélectivement ladite diode électroluminescente organique dans une position de repos, dans laquelle la face d'émission de la diode électroluminescente organique est masquée de sorte à ce que peu ou pas de lumière émise par la diode électroluminescente organique puisse sortir du dispositif lumineux, et dans une position active, dans laquelle la face d'émission de la diode électroluminescente organique est visible de sorte à ce que de la lumière émise par la diode électroluminescente organique puisse sortir du dispositif lumineux pour participer à ladite fonction d'indicateur de direction défilant. Le cas échéant, le module de contrôle est agencé pour contrôler les actionneurs de sorte à amener séquentiellement chaque diode électroluminescente organique dans sa position active, qui forme ainsi la configuration active. Le cas échéant, le module de contrôle peut être agencé de sorte à ce que cette activation séquentiel des diodes électroluminescentes organiques soit mis en œuvre en moins de 200 ms.

Selon l'invention, le module de contrôle est agencé pour contrôler l'allumage des premier et deuxième modules de sorte à réaliser un allumage séquentiel des première et deuxième sources de lumière surfaciques, notamment des première et deuxième diodes électroluminescentes organiques. Par exemple, le module de contrôle est agencé pour contrôler l'alimentation de chaque diode électroluminescente organique de sorte à allumer ou éteindre cette diode. Le cas échéant, la configuration active de cette diode est lorsqu'elle est allumée.

Selon l'invention, les premier et deuxième modules sont disposés de sorte à ce que la première source de lumière surfacique, notamment la première diode électroluminescente organique soit disposée vers l'intérieur du véhicule et la deuxième source de lumière surfacique, notamment la deuxième diode électroluminescente organique soit disposée vers l'extérieur du véhicule, lorsque le dispositif lumineux est monté dans le véhicule automobile. Le cas échéant, le module de contrôle est agencé pour allumer la première diode électroluminescente organique avant la deuxième diode électroluminescente organique. Eventuellement, le module de contrôle peut être agencé pour que la première diode électroluminescente organique reste allumée lors de l'allumage de la deuxième diode électroluminescente organique. Le module de contrôle met ainsi en œuvre un allumage séquentiel et progressif des diodes électroluminescentes organiques de l'intérieur vers l'extérieur du véhicule.

Selon un mode de réalisation de l'invention, la première diode électroluminescente organique est distincte de la deuxième diode électroluminescente organique. Le cas échéant, chaque diode électroluminescente organique comporte une paire d'électrodes, ces paires d'électrodes étant distinctes d'une diode à l'autre.

Selon l'invention, les première et deuxième diodes électroluminescentes organiques comportent une électrode commune. Le cas échéant, chaque diode électroluminescente organique forme un segment distinct d'une unique diode électroluminescente organique globale du dispositif lumineux. Par exemple, ladite diode électroluminescente organique globale présente une première face comportant une électrode, par exemple une anode, continue sur toute sa longueur, une deuxième face segmentée comportant une alternance d'une pluralité de deuxièmes électrodes et de bandes isolantes électriquement, et une couche de matériau organique apte à émettre de la lumière disposée entre les première et deuxième faces. Chaque segment formé par une partie de la première électrode, une partie de la couche de matériau organique et une deuxième électrode forme ainsi une desdites diodes électroluminescentes organiques. Le cas échéant, la première électrode peut être apte à laisser passer de la lumière, par exemple en étant transparente, et forme une face d'émission de lumière de chaque diode électroluminescente organique et chaque deuxième électrode forme une face d'installation de chaque diode électroluminescente organique. En variante, la première face peut également être segmentée.

Dans un mode de réalisation de l'invention, le dispositif lumineux comprend au moins un support comprenant une face de montage s'étendant selon trois directions perpendiculaires deux à deux, et au moins l'une des diode électroluminescente organique est montée sur la face de montage du support. La face de montage présente ainsi une surface s'étendant selon trois dimensions. Avantageusement, cette face de montage peut présenter la forme d'une surface développable. Le cas échéant, ladite diode électroluminescente organique présente une face d'installation et une face d'émission de lumière opposée à la face d'installation, la diode électroluminescente organique étant montée sur le support via sa face d'installation. La diode électroluminescente organique peut être agencée de sorte à ce qu'elle soit apte à émettre de la lumière via sa face d'émission de lumière selon une direction générale sensiblement parallèle à une normale de la face de montage.

Avantageusement, la diode électroluminescente organique est flexible. De préférence, la diode électroluminescente organique est montée sur la face de montage de sorte à présenter une forme identique à celle de la face de montage. Le cas échéant, la diode électroluminescente organique est montée de sorte à ce qu'aucun jeu ne soit présent entre sa face d'installation de ladite diode et la face de montage du support. En d'autres termes, la diode est montée sur le support sans jeu.

Dans un mode de réalisation de l'invention, la diode électroluminescente organique est collée sur la face de montage, notamment via sa face d'installation. Si on le souhaite, la diode électroluminescente peut être collée sur la face de montage à l'aide d'un film adhésif double-faces. En variante, la diode électroluminescente organique peut être collée à l'aide d'une colle.

Avantageusement, le dispositif peut comporter un pion de positionnement fixé à la diode électroluminescente organique et s'insérant dans un orifice du support. Le pion de positionnement peut par exemple être collé à la face d'installation de la diode.

Si on le souhaite, le pion de positionnement peut être pourvu d'un organe de fixation, par exemple un clip, de la diode électroluminescente organique au support. Le cas échéant, le dispositif peut être dépourvu d'adhésif reliant la diode au support.

Dans un autre mode de réalisation de l'invention, la diode électroluminescente organique est réalisée directement sur le support. Le dispositif peut être dans ce cas dépourvu de tout moyen de fixation de la diode électroluminescente organique au support. La diode électroluminescente organique peut être par exemple réalisée par un procédé d'évaporation sous vide sur le support, incluant des étapes de métallisation du support et de dépôts de matériau organique émetteur de lumière et d'électrode, ou par un procédé d'impression sous le support.

L'invention a également pour objet un procédé de commande d'un dispositif lumineux selon l'invention, caractérisé en ce qu'il comporte les étapes suivantes :
- on active le premier module pour que de la lumière émise par la première source de lumière surfacique sorte du dispositif lumineux ;
- après l'activation du premier module, on active le deuxième module pour que de la lumière émise par la deuxième source de lumière surfacique sorte du dispositif lumineux.

L'invention sera mieux comprise à la lecture de la description détaillée qui va suivre, donnée uniquement à titre d'exemple et faite en référence aux Figures annexées, sur lesquelles :
- La Figure 1 est une illustration schématique et partielle d'un dispositif lumineux selon l'invention ;
- Les Figures 2a à 2f sont des vue du dispositif lumineux de la figure 1 mettant en œuvre un procédé selon l'invention ;
- La Figure 3 est une illustration schématique et partielle d'un dispositif lumineux selon un autre mode de réalisation de l'invention.
- La Figure 4 illustre un vue en éclaté du dispositif lumineux de la figure 1 selon un premier mode de réalisation de l'invention;
- La Figure 5 est une vue en coupe du dispositif lumineux de la figure 1 selon un deuxième mode de réalisation ; et
- La Figure 6 est une vue en coupe du dispositif lumineux de la figure 1 selon un troisième mode de réalisation.

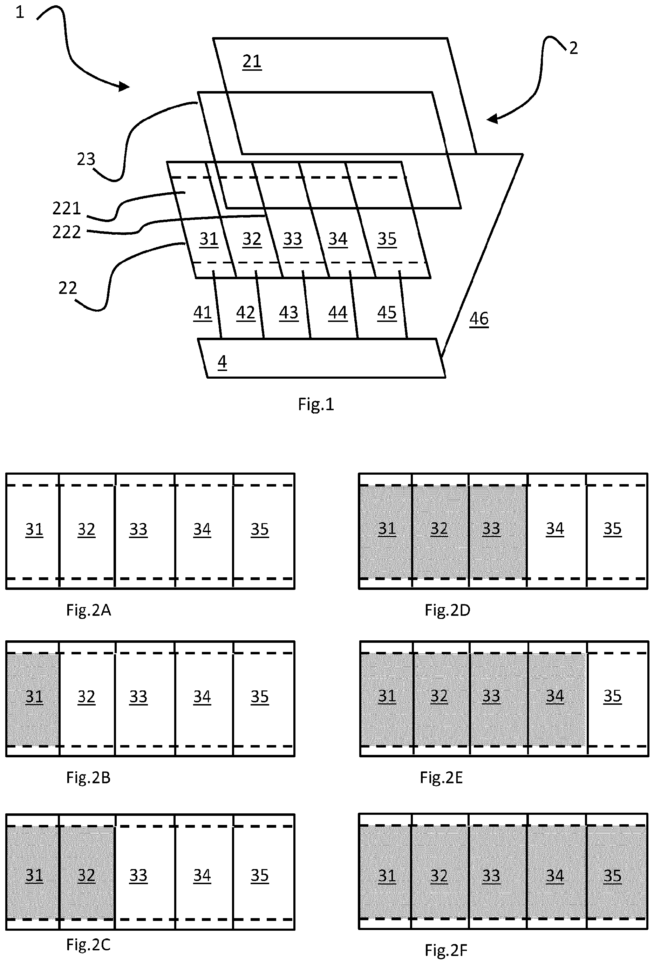

La Figure 1 illustre un dispositif lumineux 1 selon l'invention.

Le dispositif lumineux 1 comprend une diode électroluminescente organique globale ou OLED 2. L'OLED 2 présente une première face 21 réfléchissante et réalisée en aluminium formant une anode 21 de l'OLED 2. L'anode 21 s'étend de façon continue sur toute la longueur de l'OLED 2.

L'OLED 2 comprend une deuxième face 22. La deuxième face 22 est segmentée, à savoir qu'elle comporte une alternance de cathodes 221 transparentes et réalisées en oxyde d'indium-étain ou ITO et de bandes isolantes 222 électriquement.

L'OLED 2 comprend enfin une couche 23 formée d'une superposition de sous-couches de matériau organique aptes à émettre de la lumière de couleur ambre lorsqu'elles sont alimentées électriquement. La couche 23 est disposée entre les première et deuxième faces 21 et 22 de sorte à ce qu'une partie de la lumière qu'elle émet passe à travers la cathode 221 et l'autre partie de cette lumière soit réfléchie par l'anode 21 et passe également à travers la cathode 221.

Chaque superposition d'une cathode 221, d'une partie de la couche 23 et d'une partie de l'anode 21 situées en vis-à-vis de cette cathode 221 forme un segment de l'OLED globale 2 qui est activable sélectivement. Ce segment forme ainsi lui-même une OLED dont la face d'émission de lumière est sa cathode transparente 221 et dont l'anode 21 est commune aux autres segments. Il va de soi quel l'anode 21 pourrait également être segmentée.

Le dispositif lumineux comprend ainsi cinq modules 31 à 35, chacun formé par l'un des segments de l'OLED globale 2.

Le dispositif lumineux comprend en outre un module de contrôle 4 connecté d'une part à chaque cathode 221 des modules 31 à 35 par des fils 41 à 45 et à l'anode commune 21 par un fil 46. Le module de contrôle 4 peut ainsi alimenter de façon sélective chacun des modules 31 à 35, via les fils 41 à 45, de sorte à allumer sélectivement les OLEDs de ces modules.

Le module de contrôle 4 est ici agencé sous la forme d'un microcontrôleur comportant une unité de mémoire (non représenté) dans lequel est stocké une commande d'allumage séquentiel des modules 31 à 35 pour réaliser un indicateur de direction défilant.

On a représenté en figure 2a le dispositif 1 lorsque toutes les OLEDs des modules 31 à 35 sont éteintes et en figures 2b à 2f ladite séquence d'allumage pour la réalisation de l'indicateur de direction défilant.

Les modules 31 à 35 sont disposés dans le dispositif 1 de sorte à ce que l'OLED du premier module 31 soit disposée vers l'intérieur du véhicule et l'OLED du dernier module 35 soit disposée vers l'extérieur du véhicule, lorsque le dispositif lumineux 1 est monté dans un véhicule automobile.

Lorsque le module de contrôle reçoit une commande d'initiation de la séquence pour la réalisation de l'indicateur de direction défilant, le module de contrôle 4 alimente en premier lieu le module 31 pour allumer l'OLED de ce module 31 (figure 2b). Après un laps de temps de 200 ms ou moins, le module de contrôle 4 alimente le module 32 pour allumer la première diode électroluminescente organique de ce module 32, tout en continuant d'alimenter le module 31 (figure 2c). Le module de contrôle 4 continue ainsi d'allumer séquentiellement les OLEDs des modules suivants tout en conservant les OLEDs des modules précédents allumées (figures 2d et 2e), jusqu'à ce que toutes les OLEDs des modules 31 à 35 soient allumées (figure 2f). Le module de contrôle 4 met ainsi en œuvre un allumage séquentiel et progressif des OLEDs de l'intérieur vers l'extérieur du véhicule. Le cas échéant, la surface lumineuse apparente formée par l'ensemble de toutes les OLEDs allumée est continue. En outre, une fois toutes ces OLEDs allumées, le module de contrôle 4 interrompt simultanément l'alimentation de toutes les OLEDs, puis réitère la séquence jusqu'à la réception d'une commande d'interruption de la séquence. et réalise ainsi un indicateur de direction défilant réglementaire. par exemple tel que défini dans le règlement UNECE n°6 relatif aux indicateurs de direction, au paragraphe §5.6.

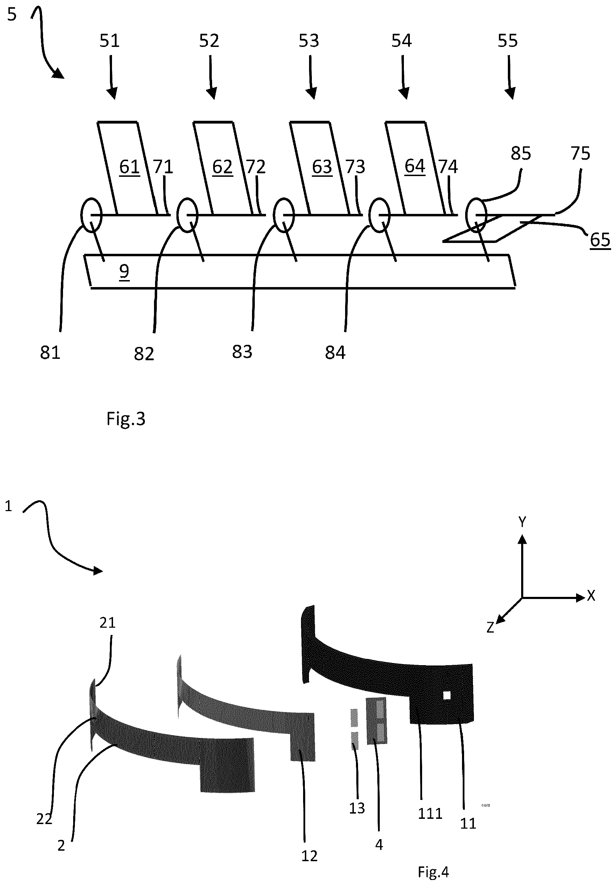

On a représenté en figure 3 un dispositif lumineux 5 selon un autre mode de réalisation de l'invention. Le dispositif lumineux 5 comporte cinq modules lumineux 51 à 55 comportant chacun une diode électroluminescente organique OLED 61 à 65, les OLEDs 61 à 65 étant distinctes les unes des autres.

Chaque OLED 61 à 65 est montée de façon en rotation autour d'un axe 71 à 75, dans le dispositif lumineux 5 et chaque module comporte un actionneur 81 à 85 associé à l'OLED 61 à 65 dudit module pour entraîner l'axe 71 à 75 et amener sélectivement ladite OLED dans une position de repos (P) et dans une position active (A). L'OLED 65 est représenté dans sa position de repos (P) où sa face d'émission est masquée de sorte à ce que peu ou pas de lumière qu'elle émet puisse sortir du dispositif lumineux 1. Les OLEDs 61 à 64 sont représentés dans une position active, dans laquelle leur face d'émission est visible de sorte à ce que la lumière qu'elles émettent puisse sortir du dispositif lumineux 1 pour participer à ladite fonction d'indicateur de direction défilant.

Le dispositif lumineux 1 comporte un module de contrôle 9 qui est agencé pour contrôler les actionneurs 71 à 75 de sorte à amener séquentiellement chaque diode électroluminescente organique dans sa position active.

On a représenté en figure 4 une vue en éclaté du dispositif lumineux 1 de la figure 1, dans laquelle la segmentation de l'OLED globale 2 n'est pas représentée.

Outre l'OLED globale 2 et le module de contrôle 4, le dispositif lumineux 1 comprend un support 11 comprenant une face de montage 111 s'étendant selon trois directions perpendiculaires X, Y et Z deux à deux pour former une surface développable. L'OLED globale 2 est montée sur la face de montage 111 du support 11.

Dans l'exemple représenté, la face de montage 111 présente une forme cylindrique, sans que l'invention soit toutefois limitée à celle seule forme de surface développable.

L'OLED 2 présente une face d'installation 21 formée par l'anode et une face d'émission de lumière formée par la face 22, opposée à la face d'installation 21. L'OLED 2 est flexible et est montée sur la face de montage 111 de sorte à se conformer au profil de cette face de montage 111 et ainsi présenter une forme identique à celle de cette face de montage 111. En outre, du fait de la forme développable de la face de montage 111, l'OLED 2 est montée sur le support 11 sans jeu.

L'OLED 2 est collée sur la face de montage 111 à l'aide d'un film adhésif double-faces 12. En outre, le module de contrôle 4 est également monté sur la face de montage 111 à l'aide d'un film double-faces 13.

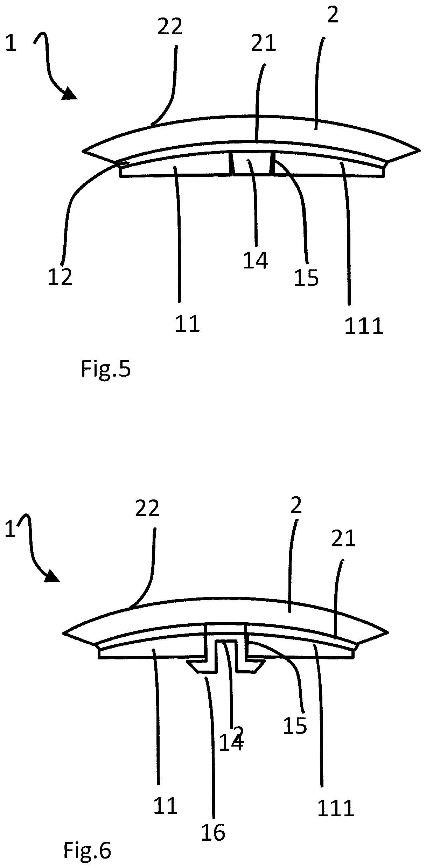

On a représenté en figure 5 une variante du mode de réalisation de la figure 4. Les références des éléments identiques entre ces deux modes de réalisation seront conservées.

Le dispositif 1 comporte un pion de positionnement 14 fixé au préalable à la face d'installation 21 de l'OLED 2 par le film adhésif double-faces 12. Le pion 14 vient s'insérer dans un orifice 15 du support 11 de sorte à positionner l'OLED 2 dans une position prédéterminée sur ce support 11.

On a représenté en figure 6 une autre variante du mode de réalisation de la figure 4. Les références des éléments identiques entre ces deux modes de réalisations seront conservées.

Dans ce mode de réalisation, le pion de positionnement 14 est pourvu d'un clip 16 permettant, en sus de sa fonction de positionnement, de solidariser l'OLED 2 au support 11. Ce mode de fixation permet ainsi de supprimer le film adhésif doubles-faces de la figure 4 reliant l'OLED 2 au support 11.

L'invention n'est bien entendu pas limitée aux modes de réalisation présentés et d'autres modes de réalisation pourront apparaître clairement à l'homme du métier sans sortir du cadre la présente invention.

## Revendications

1. Dispositif lumineux (1,5) pour véhicule automobile, le dispositif lumineux comprenant un premier module (31,51) comprenant une première source de lumière surfacique (61), un deuxième module (35,55) comprenant une deuxième source de lumière surfacique (65) et un module de contrôle (4, 9) agencé pour contrôler les premier et deuxième modules de sorte à ce que le dispositif lumineux réalise une fonction d'indicateur de direction défilant dans lequel le module de contrôle est agencé pour contrôler les premier et deuxième modules (31,51,35,55) de sorte à ce que les sources de lumière surfaciques (61,65) soient séquentiellement dans une configuration active
dans lequel le module de contrôle (4) est agencé pour contrôler l'allumage des premier et deuxième modules (31,35) de sorte à réaliser un allumage séquentiel des première et deuxième sources de lumière surfacique ; dans lequel les premier et deuxième modules (31,35) sont disposés de sorte à ce que la première source de lumière surfacique soit disposée vers l'intérieur du véhicule et la deuxième source de lumière surfacique soit disposée vers l'extérieur du véhicule, dans lequel le module de contrôle (4) est agencé pour allumer la première source de lumière surfacique avant la deuxième source de lumière surfacique, et dans lequel la première source de lumière surfacique (61) est une première diode électroluminescente organique et la deuxième source de lumière surfacique (65) est une deuxième diode électroluminescente organique,
**caractérisé en ce que** les première et deuxième source de lumière surfacique comportent une électrode commune (21).

2. Dispositif lumineux (1) selon la revendication 1, dans lequel chaque source de lumière surfacique (31 à 35) forme un segment distinct d'une unique source de lumière surfacique globale (2) du dispositif lumineux.

3. Dispositif lumineux (1) selon la revendication 2, dans lequel source de lumière surfacique globale (2) est une unique diode électroluminescente organique globale et présente une première face comportant une première électrode (21), continue sur toute sa longueur, une deuxième face segmentée (22) comportant une alternance d'une pluralité de deuxièmes électrodes (221) et de bandes isolantes électriquement (222), et une couche de matériau organique (23) apte à émettre de la lumière disposée entre les première et deuxième faces, chaque segment (31 à 35) formé par une partie de la première électrode (21), une partie de la couche de matériau organique (23) et une deuxième électrode (221) formant ainsi une desdites diodes électroluminescentes organiques.

4. Dispositif lumineux (1,5) selon la revendication 3, dans lequel la première électrode (21) est apte à laisser passer de la lumière et forme une face d'émission de lumière de chaque diode électroluminescente organique (31 à 35) et chaque deuxième électrode (221) forme une face d'installation de chaque diode électroluminescente organique.

5. Dispositif lumineux (5) selon la revendication 1, dans lequel la première diode électroluminescente organique (61) est distincte de la deuxième diode électroluminescente organique (65).

6. Dispositif lumineux (1,5) selon l'une des revendications 2 à 5, dans lequel le module de contrôle est agencé pour contrôler les premier et deuxième modules (31,51,35,55) de sorte à ce que les diodes électroluminescentes organiques (61,65) soient séquentiellement dans une configuration active.

7. Dispositif lumineux (5) selon la revendication 6, dans lequel chaque diode électroluminescente organique (61,62,63,64,65) étant montée de façon mobile dans le dispositif lumineux, dans lequel chaque module (51,52 ,53,54,55) comporte un actionneur (81,82,83,84,85) associé à la diode électroluminescente organique du module pour amener sélectivement ladite diode électroluminescente organique dans une position de repos et dans une position active, et dans lequel le module de contrôle (9) est agencé pour contrôler les actionneurs de sorte à amener séquentiellement chaque diode électroluminescente organique dans sa position active.

8. Dispositif lumineux (1) selon la revendication 6 ou 7, dans lequel le module de contrôle (4) est agencé pour contrôler l'allumage des premier et deuxième modules (31,35) de sorte à réaliser un allumage séquentiel des première et deuxième diodes électroluminescentes organiques.

9. Dispositif lumineux (1) selon la revendication précédente, dans lequel les premier et deuxième modules (31,35) sont disposés de sorte à ce que la première diode électroluminescente organique soit disposée vers l'intérieur du véhicule et la deuxième diode électroluminescente organique soit disposée vers l'extérieur du véhicule, dans lequel le module de contrôle (4) est agencé pour allumer la première diode électroluminescente organique avant la deuxième diode électroluminescente organique.

10. Dispositif lumineux (1) selon l'une des revendications 2 à 9, dans lequel les première et deuxième diodes électroluminescentes organiques comportent une électrode commune (21).

11. Procédé de commande d'un dispositif lumineux (1,5) selon l'une des revendications précédentes, **caractérisé en ce qu'**il comporte les étapes suivantes :
- on active le premier module (31,51) pour que de la lumière émise par la première source de lumière surfacique sorte du dispositif lumineux ;
- après l'activation du premier module, on active le deuxième module (35,55) pour que de la lumière émise par la deuxième source de lumière surfacique sorte du dispositif lumineux.

## Patentansprüche

1. Leuchtvorrichtung (1, 5) für ein Kraftfahrzeug, wobei die Leuchtvorrichtung Folgendes beinhaltet: ein erstes Modul (31, 51), das eine erste flächige Lichtquelle (61) beinhaltet, ein zweites Modul (35, 55), das eine zweite flächige Lichtquelle (65) beinhaltet, und ein Steuermodul (4, 9), das dazu eingerichtet ist, das erste und das zweite Modul so zu steuern, dass die Leuchtvorrichtung eine Funktion eines dynamischen Fahrtrichtungsanzeigers ausführt,
wobei das Steuermodul dazu eingerichtet ist, das erste und das zweite Modul (31, 51, 35, 55) so zu steuern, dass die flächigen Lichtquellen (61, 65) sequentiell in einer aktiven Konfiguration sind,
wobei das Steuermodul (4) dazu eingerichtet ist, das Einschalten des ersten und des zweiten Moduls (31, 35) so zu steuern, dass ein sequentielles Einschalten der ersten und der zweiten flächigen Lichtquelle ausgeführt wird;
wobei das erste und das zweite Modul (31, 35) so angeordnet sind, dass die erste flächige Lichtquelle zur Innenseite des Fahrzeugs hin angeordnet ist und die zweite flächige Lichtquelle zur Außenseite des Fahrzeugs hin angeordnet ist, wobei das Steuermodul (4) dazu eingerichtet ist, die erste flächige Lichtquelle vor der zweiten flächigen Lichtquelle einzuschalten, und
wobei die erste flächige Lichtquelle (61) eine erste organische Elektrolumineszenzdiode ist und die zweite flächige Lichtquelle (65) eine zweite organische Elektrolumineszenzdiode ist,
**dadurch gekennzeichnet, dass** die erste und die zweite flächige Lichtquelle eine gemeinsame Elektrode (21) umfassen.

2. Leuchtvorrichtung (1) nach Anspruch 1, wobei jede flächige Lichtquelle (31 bis 35) ein individuelles Segment einer einzigen globalen flächigen Lichtquelle (2) der Leuchtvorrichtung bildet.

3. Leuchtvorrichtung (1) nach Anspruch 2, wobei die globale flächige Lichtquelle (2) eine einzige globale organische Elektrolumineszenzdiode ist und Folgendes aufweist: eine erste Seite, die eine erste Elektrode (21), die über ihre gesamte Länge durchgehend ist, umfasst, eine zweite segmentierte Seite (22), die in abwechselnder Reihenfolge eine Vielzahl von zweiten Elektroden (221) und elektrisch isolierende Streifen (222) umfasst, und eine zwischen der ersten und der zweiten Seite angeordnete Schicht aus organischem Material (23), die dazu fähig ist, Licht zu emittieren, sodass jedes Segment (31 bis 35), das durch einen Teil der ersten Elektrode (21), einen Teil der Schicht aus organischem Material (23) und eine zweite Elektrode (221) gebildet wird, auf diese Weise eine der organischen Elektrolumineszenzdioden bildet.

4. Leuchtvorrichtung (1, 5) nach Anspruch 3, wobei die erste Elektrode (21) dazu fähig ist, Licht durchzulassen, und eine Lichtemissionsseite jeder organischen Elektrolumineszenzdiode (31 bis 35) bildet, und jede zweite Elektrode (221) eine Installationsseite jeder organischen Elektrolumineszenzdiode bildet.

5. Leuchtvorrichtung (5) nach Anspruch 1, wobei die erste organische Elektrolumineszenzdiode (61) von der zweiten organischen Elektrolumineszenzdiode (65) getrennt ist.

6. Leuchtvorrichtung (1, 5) nach einem der Ansprüche 2 bis 5, wobei das Steuermodul dazu eingerichtet ist, das erste und das zweite Modul (31, 51, 35, 55) so zu steuern, dass die organischen Elektrolumineszenzdioden (61, 65) sequentiell in einer aktiven Konfiguration sind.

7. Leuchtvorrichtung (5) nach Anspruch 6, wobei jede organische Elektrolumineszenzdiode (61, 62, 63, 64, 65) mobil in der Leuchtvorrichtung montiert ist, wobei jedes Modul (51, 52, 53, 54, 55) ein Stellglied (81, 82, 83, 84, 85) umfasst, das mit der organischen Elektrolumineszenzdiode des Moduls assoziiert ist, um die organische Elektrolumineszenzdiode selektiv in eine Ruhestellung und in eine aktive Stellung zu führen, und wobei das Steuermodul (9) dazu eingerichtet ist, die Stellglieder so zu steuern, dass jede organische Elektrolumineszenzdiode sequentiell in ihre aktive Stellung geführt wird.

8. Leuchtvorrichtung (1) nach Anspruch 6 oder 7, wobei das Steuermodul (4) dazu eingerichtet ist, das Einschalten des ersten und des zweiten Moduls (31, 35) so zu steuern, dass ein sequentielles Einschalten der ersten und der zweiten organischen Elektrolumineszenzdiode ausgeführt wird.

9. Leuchtvorrichtung (1) nach dem vorhergehenden Anspruch, wobei das erste und das zweite Modul (31, 35) so angeordnet sind, dass die erste organische Elektrolumineszenzdiode zur Innenseite des Fahrzeugs hin angeordnet ist und die zweite organische Elektrolumineszenzdiode zur Außenseite des Fahrzeugs hin angeordnet ist, wobei das Steuermodul (4) dazu eingerichtet ist, die erste organische Elektrolumineszenzdiode vor der zweiten organischen Elektrolumineszenzdiode einzuschalten.

10. Leuchtvorrichtung (1) nach einem der Ansprüche 2 bis 9, wobei die erste und die zweite organische Elektrolumineszenzdiode eine gemeinsame Elektrode (21) umfassen.

11. Verfahren zur Steuerung einer Leuchtvorrichtung (1, 5) nach einem der vorhergehenden Ansprüche, **dadurch gekennzeichnet, dass** es die folgenden Schritte beinhaltet:
- Aktivieren des ersten Moduls (31, 51), damit von der ersten flächigen Lichtquelle emittiertes Licht aus der Leuchtvorrichtung austritt;
- nach dem Aktivieren des ersten Moduls, Aktivieren des zweiten Moduls (35, 55), damit von der zweiten flächigen Lichtquelle emittiertes Licht aus der Lichtvorrichtung austritt.

## Claims

1. Luminous motor-vehicle device (1, 5), the luminous device comprising a first module (31, 51) comprising a first areal light source (61), a second module (35, 55) comprising a second areal light source (65) and a control module (4, 9) that is arranged to control the first and second modules so that the luminous device performs a sequential direction indicator function,
wherein the control module is arranged to control the first and second modules (31, 51, 35, 55) so that the areal light sources (61, 65) are sequentially in an active configuration,
wherein the control module (4) is arranged to control the turn-on of the first and second modules (31, 35) so as to achieve a sequential turn-on of the first and second areal light sources,
wherein the first and second modules (31, 35) are placed so that the first areal light source is placed towards the interior of the vehicle and the second areal light source is placed towards the exterior of the vehicle, wherein the control module (4) is arranged to turn on the first areal light source before the second areal light source, and
wherein the first areal light source (61) is a first organic light-emitting diode and the second areal light source (65) is a second organic light-emitting diode, **characterized in that** the first and second areal light sources comprise a common electrode (21).

2. Luminous device (1) according to Claim 1, wherein each areal light source (31 to 35) forms a separate segment of a single overall areal light source (2) of the luminous device.

3. Luminous device (1) according to Claim 2, wherein the overall areal light source (2) is a single overall organic light-emitting diode and has a first face comprising a first electrode (21), which is continuous over all its length, a segmented second face (22) comprising an alternation of a plurality of second electrodes (221) and of electrically insulating bands (222), and a layer of organic material (23) able to emit light, said layer being placed between the first and second faces, each segment (31 to 35) formed by one portion of the first electrode (21), one portion of the layer of organic material (23) and a second electrode (221) thus forming one of said organic light-emitting diodes.

4. Luminous device (1, 5) according to Claim 3, wherein the first electrode (21) is able to let light pass and forms a light-emitting face of each organic light-emitting diode (31 to 35) and each second electrode (221) forms a face for installing each organic light-emitting diode.

5. Luminous device (5) according to Claim 1, wherein the first organic light-emitting diode (61) is separate from the second organic light-emitting diode (65).

6. Luminous device (1, 5) according to one of Claims 2 to 5, wherein the control module is arranged to control the first and second modules (31, 51, 35, 55) so that the organic light-emitting diodes (61, 65) are sequentially in an active configuration.

7. Luminous device (5) according to Claim 6, wherein each organic light-emitting diode (61, 62, 63, 64, 65) is movably mounted in the luminous device, wherein each module (51, 52, 53, 54, 55) comprises an actuator (81, 82, 83, 84, 85) that is associated with the organic light-emitting diode of the module with a view to selectively placing said organic light-emitting diode in a rest position and in an active position, and wherein the control module (9) is arranged to control the actuators so as to sequentially place each organic light-emitting diode in its active position.

8. Luminous device (1) according to Claim 6 or 7, wherein the control module (4) is arranged to control the turn-on of the first and second modules (31, 35) so as to achieve a sequential turn-on of the first and second organic light-emitting diodes.

9. Luminous device (1) according to the preceding claim, wherein the first and second modules (31, 35) are placed so that the first organic light-emitting diode is placed towards the interior of the vehicle and the second organic light-emitting diode is placed towards the exterior of the vehicle, wherein the control module (4) is arranged to turn on the first organic light-emitting diode before the second organic light-emitting diode.

10. Luminous device (1) according to one of Claims 2 to 9, wherein the first and second organic light-emitting diodes comprise a common electrode (21).

11. Method for controlling a luminous device (1, 5) according to one of the preceding claims, **characterized in that** it comprises the following steps:
- the first module (31, 51) is activated so that the light emitted by the first areal light source exits from the luminous device;
- after the activation of the first module, the second module (35, 55) is activated so that the light emitted by the second areal light source exits from the luminous device.
